# EUROPEAN PATENT APPLICATION

(11) **EP 2 745 701 A1**
(43) Date of publication of application: **25.06.2014**
(21) Application number: 12817931.4
(22) Date of filing: 26.06.2012
(51) Int. Cl.: A23G 3/34

(54) **FILLING SWEET (VARIANTS) AND METHOD FOR MAKING SAME**

(30) Priority: 26.07.2011 RU 2011131489
(71) Applicant: Stephanovich, Oleg Valeryevich, Syktyvkar 167009 (Komi Respublika) (RU); Fayershtein, Anton Viktorovich, Aikino 169040 (Komi Respublika) (RU)
(72) Inventor: Stephanovich, Oleg Valeryevich, Syktyvkar 167009 (Komi Respublika) (RU); Fayershtein, Anton Viktorovich, Aikino 169040 (Komi Respublika) (RU)
(74) Representative: Plougmann & Vingtoft A/S
(86) International application number: PCT/RU2012/000506
(87) International publication number: WO 2013/015713

(57) **Abstract**

The invention relates to the food industry. The sweet contains a protein mass and a high-boiled sugar mass. The high-boiled sugar mass consists of sugar and/or a sugar substitute and water, and the protein mass consists of wheat flour and gram flour or pea meal or a composition thereof and melted fat, preferably real butter. The method for making the sweet involves the concurrent preparation of the protein mass and the high-boiled sugar mass. The sweet is then shaped in the form of a layered product made up of fine fibres by the repeated stretching of the high-boiled sugar mass and the saturation thereof with the protein mass. The group of inventions makes it possible to produce a sweet in the style of a pastry which is comprised of fine, readily separating fibres and has an enhanced biological and nutritional value and digestibility and an increased shelf life.

## Description

### Technical field

This invention related to the food industry, and particularly, to confectionary industry, and can be used for preparing oriental sweets.

### Prior art

A composition is known for preparing crude spice-cakes (RU 2240004, Int. CI. A 21 D 13/08, publication date: November 20, 2004) comprising wheat flour of the 1^{st} sort, granulated sugar, ammonium hydro-carbonate salt and gram flour in the following ratio, kg per 100 kg of used flour: wheat flour of the 1^{st} sort, 10-70; gram flour, 30-90; water up to dough humidity of 23.5-25%; granulated sugar, 62; ammonium hydro-carbonate salt, 0.9.

The spice-cakes with addition of gram flour exhibit good sensory characteristics due to improved porosity and possess better taste quality and enhanced energetic value due to increased content of protein and fat in the product. However, without packaging, the product dries up and loses its qualities.

A composition of Halva is known (RU 2025983, Int. CI. A 23 G 3/00, publication date: January 9, 1995) comprising granulated sugar, butter, wheat flour as well as vanillin, pine nut press-cake and pine nut oil at the following component ratio, wt. %:
Granulated sugar: 26.8 - 29.0
Pine nut press-cake: 16.8 - 19.9
Pine nut oil: 2.2 - 3.5
Wheat flour: 15.4 - 17.2
Vanillin: 0.1 - 0.03
Butter: the balance.

A disadvantage is insufficient biological and nutritional value, high cost, and besides, halva has a firm texture.

A Halva is known (RU 2152729, Int. CI. A 23 G 3/00, publication date: July 20, 2000), used as a prototype, comprising high-boiled sugar mass, protein mass from flax seeds, or flax seed press-cake, or their mixture with other oil-producing seeds and special additives at the following ratio, wt. %: high-boiled sugar mass, 22-78; protein mass, 10-60; special additives, the balance.
A disadvantage is insufficient biological and nutritional value, digestibility, firm product texture and limited shelf life.

A method of Halva production is known (RU 2354130, Int. CI. A 23 G 3/54), used as a prototype, comprising a preparation of protein paste mass with addition of gram flour in the amount of 3-5 wt % of protein paste mass, extract of fuller's herb or licorice, concurrent preparation of a high-boiled sugar mass, whip-blending of the high-boiled sugar mass with extract of fuller's herb or licorice, mixing of whip-blended high-boiled sugar mass and paste mass, cooling and packaging, with subsequent introduction of special additives. The invention enables production of dietetic, diabetic halva with reduced carbohydrate content energy value, without increased water-absorbing capacity.

A disadvantage of this known method is insufficient digestibility, biological and nutritional value, and firm texture of the obtained product.

The objective of this invention is to broaden the assortment of confectionary products and methods for producing sweets in the style of a pastry, which is comprised of fine, readily separating fibers and has enhanced biological and nutritional value, digestibility and an increased shelf life.

The technical result consists in realization of the product and method for producing a filling sweet in the style of a pastry comprised of fine, readily separating fibers. Another technical result consists in enhancement of biological and nutritional value, digestibility and an increased shelf life.

The invention is provided in variants.
According to the first variant, the technical result is achieved by the fact that a filling sweet contains a protein mass and a high-boiled sugar mass; according to the invention, the high-boiled sugar mass consists of sugar and/or a sugar substitute and water, and the protein mass consists of wheat flour and gram flour, or pea meal or a composition thereof and melted animal fat or vegetable oil, preferably real butter, at the following component ratio, wt. %:
- high-boiled sugar mass: 30-70;
- protein mass: 70-30,
in which case the sweet has a layered fine-fibrous texture obtained by repeated stretching of the high-boiled sugar mass and the saturation thereof with the protein mass. Wheat and gram flour or pea meal or a composition thereof is used at the ratio of 1:0.25-1.6.

According to the second variant, the filling sweet contains a protein mass, high-boiled sugar mass and special additives; according to the invention, the high-boiled sugar mass consists of sugar and/or a sugar substitute and water, and the protein mass consists of wheat flour and gram flour, or pea meal or a composition thereof and melted animal fat or vegetable oil, preferably real butter, at the following component ratio, wt. %:
- high-boiled sugar mass: 30-65;
- protein mass: 65-30;
- special additives: the balance,
in which case the sweet has a layered fine-fibrous texture obtained by repeated stretching of the high-boiled sugar mass and the saturation thereof with the protein mass. Wheat and gram flour or pea meal or a composition thereof is used at the ratio of 1:0.25-1.6.

A method for preparing a sweet comprising preparation of a protein mass with addition of a gram flour, concurrent preparation of a high-boiled sugar mass, according to the invention, the high-boiled sugar mass is prepared in the form of a viscous toffee from sugar and/or a sugar substitute and water, and the protein mass is prepared from melted animal fat or vegetable oil, preferably real butter, and a composition of wheat flour and gram and/or pea flour, the sweet is shaped in the form of a layered product made up of fine fibers by the repeated stretching of the high-boiled sugar mass and the saturation thereof with the protein mass, in which case wheat and gram and/or pea flour or a composition thereof is used at the ratio of 1:0.25-1.6. During the preparation stage, special additives, such as food dye and/or biologically active substance (BAS), and/or flavoring are introduced to the protein and/or high-boiled sugar mass. Saturation of the high-boiled sugar mass with the protein mass is performed at a temperature that ensures stretchability. After each stretching cycle, saturated high-boiled sugar mass is folded into smaller sizes, for example, by braiding, crisscrossing, coiling or spiraling. If necessary, the folded toffee is twisted. Prepared mass is subject to repeated longitudinal stretching, folding to form additional layers, and firming up, if required.

### Brief description of the drawings

The invention is explained by the photographs.

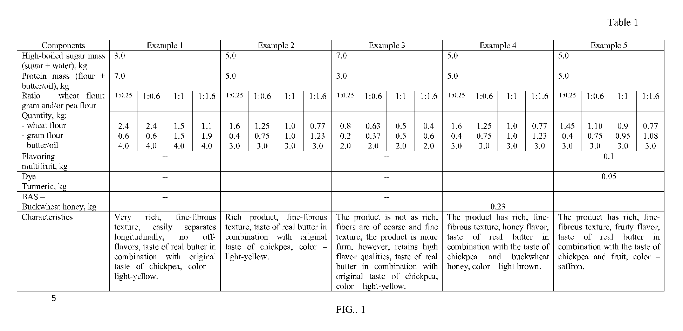

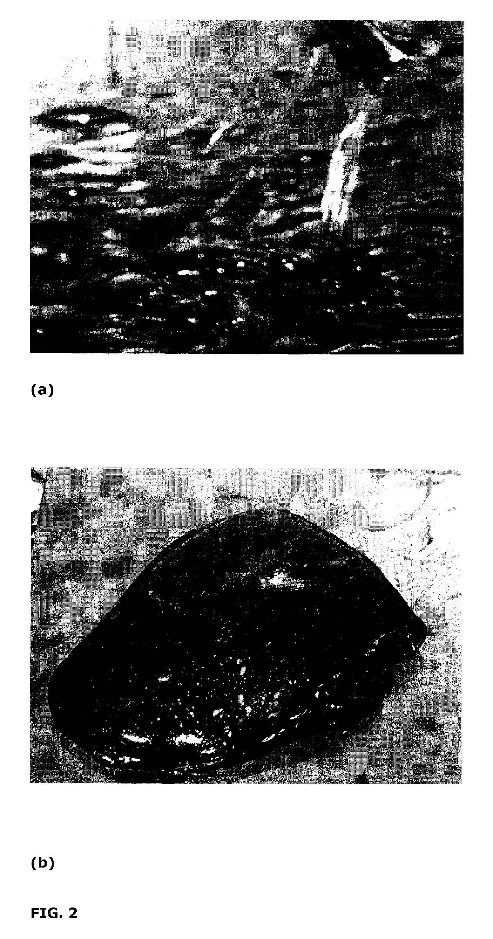

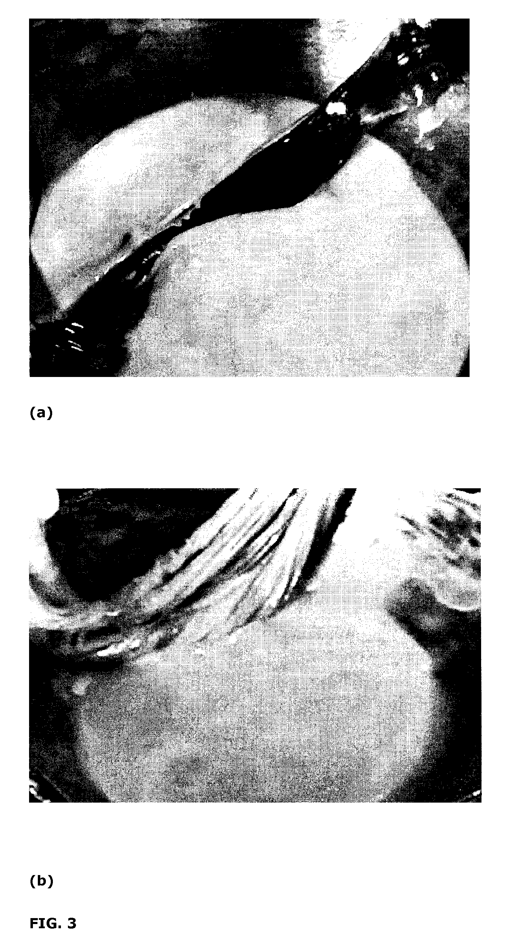

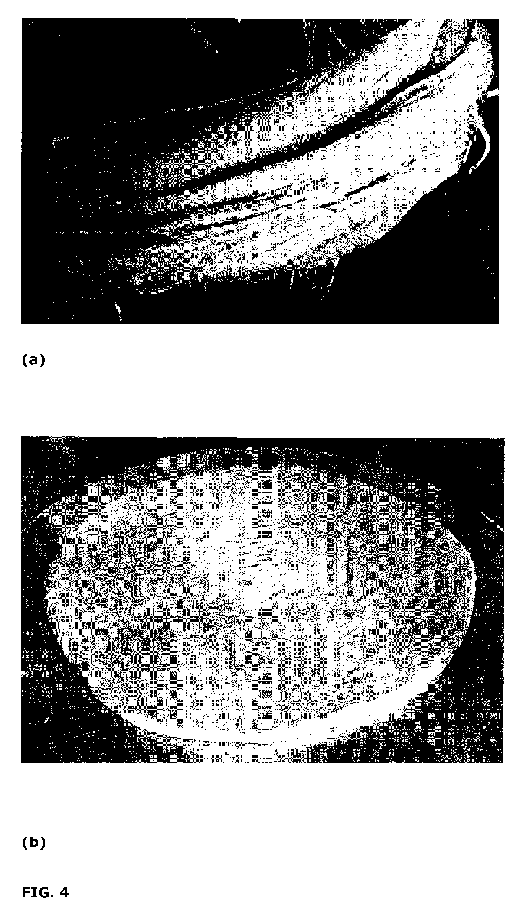

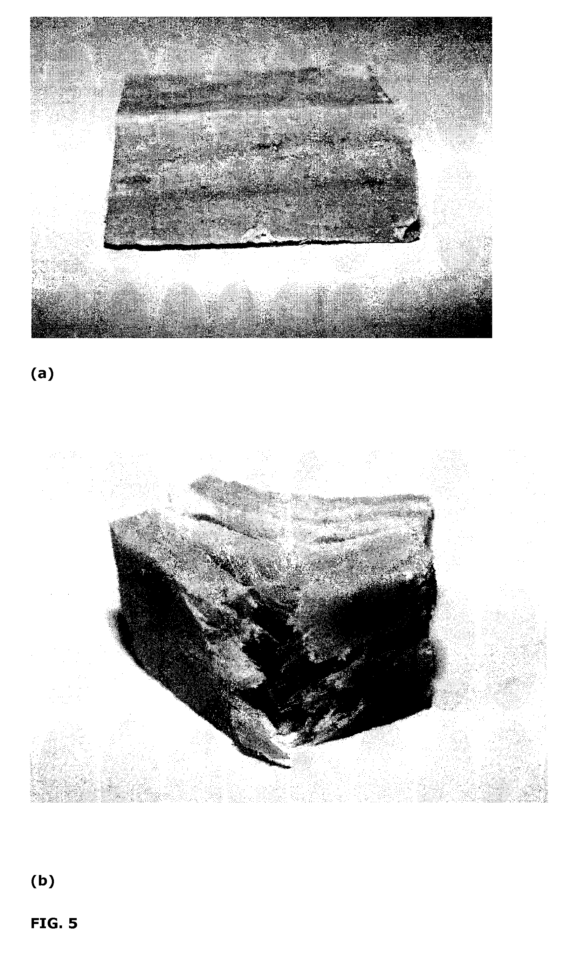

Figure 1 shows the table containing examples of product preparation; Fig. 2 shows photographs illustrating the caramel preparation step (a - stretchability of a high-boiled sugar mass; b - appearance of a high-boiled sugar toffee); Fig. 3 shows photographs illustrating the step of stretching high-boiled sugar mass and its saturation with protein mass (a - high-boiled sugar mass at the initial stage of product texture formation, b - same mass after repeated stretching and saturation), Fig. 4 shows photographs of the ready-to-use mass and product after firming up (a - high-boiled sugar mass after complete impregnation with protein mass, b - same mass after firming up, including rolling), Fig. 5 shows photographs of the finished product in the style of a pastry (a - appearance, b -view at break-off).

### Realization of the invention

Claimed filling sweet contains protein mass and high-boiled sugar mass.
The high-boiled sugar mass comprises sugar or a sugar substitute and water. The use of cane sugar is preferable, since it possesses a combination of useful microelements (calcium, magnesium, iron, phosphorus, and potassium), characteristic taste and flavor due to molasses content. It is also possible to use beet sugar, sugar powder, isomalt and other sugar substitutes. To prepare syrup, any sweetener can be used. The high-boiled sugar mass is prepared by preparing syrup of a certain viscosity and forming a high-boiled sugar toffee upon cooling (Fig. 2). The high-boiled sugar mass may contain additives. Additives can be fillers in the form of natural or food flavors and/or dyes, and/or biologically active substances (BAS), for example, honey.

The protein mass comprises a composition of wheat and gram and/or pea flour at the ratio of 1:0.25-1.6 and melted animal fat or vegetable oil. The use of a real butter made from cow's milk is preferable, since it adds a special flavor and taste to the product. In addition, real butter is rich in vitamins and calcium, and contains phospholipids necessary for maintaining the structure of cells, especially nerve cells. A natural homemade butter contains irreplaceable amino acids, which are supplied to a human body only with food. As an option, the protein mass may contain special powder additives - natural (for example, turmeric root) or food dyes, flavorings, and biologically active substances, for example, black cumin powder.

Gram flour contains vitamins A, B₁, B₂, B₆, C, PP, E as well as potassium, calcium, phosphorus, iron, magnesium, selenium and zinc compounds. By its protein content gram is comparable to natural meat. It is known that gram flour is used as a preventive remedy against malignant tumors, liver diseases, and is extremely useful in case of bone and joint diseases. In addition, gram flour contains a lot of soluble food fibers (dietary fibers), so called complex carbohydrates, necessary for our bodies to ensure health and productive life; the fibers improve digestion and strengthen immunity.
Pea flour contains antioxidants, cystine, lysine, tryptophan, arginine, methionine, and is extremely rich in phosphorus. Due to multitude of important components, the flour is useful in terms of preventing obesity, promotes intestine cleansing from accumulated waste, improves liver and kidney function, and helps maintaining normal blood cholesterol level. Thiamine (one of the B-group vitamins), contained in pea flour, improves brain activity and supplies the body with energy. Thiamine inhibits the aging process due to its antioxidant properties. Phosphorus and phosphoric acid facilitate formation of a number of enzymes, necessary for normal chemical reactions to occur, as well as improve oxygen transport within blood cells.

Gram and pea flour surpasses wheat flour by 4 times in terms of potassium, calcium and vitamins B₁ and PP content, and contains twice as much phosphorus, magnesium, iron, protein and dietary fibers. The introduction of gram flour, pea flour or a combination thereof into a confectionary product provides high biological and nutritional value of the product and adds original taste.

According to the first variant, the high-boiling sugar mass content is 30-70%, and protein content is 70-30%. According to the second variant, the high-boiling sugar mass content is 30-65%, protein content is 30-65%, and special additives - the balance. The special additives can be introduces during the process of producing either protein, or high-boiling sugar mass. Quantitative ratio of the additives constitutes 0.01-5.0 wt.% of the total mass (flavoring: 0.05-0.1%, dye: 0.01-0.1; BAS: 0.05-5.0%).

The filling sweet has a layered fine-fibrous texture, which based on its composition represents a balanced product in terms of fats, proteins and carbohydrates.
The method of preparation is realized as follows.

The preparation method is based on a valuable property of gram and pea flour: both practically do not absorb any fat, or absorb very little fat. This allows obtaining a protein mass with a special property resulting in fine-fibrous texture of the product. Both high-boiled sugar mass and protein mass are prepared concurrently.

In order to prepare a protein mass, a composition of flour and melted butter is used at the ratio of 1:1.0-2.0. Wheat and gram and/or pea flours are used at the ratio of 1:0.25-1.6. Only fine-ground gram and pea flour and the highest and/or first category wheat flour are used for preparation. Butter is melted on a low heat, and the process is continued until foam is formed. After the foam collapses, the butter is cooled down to a temperature preventing the flour from coagulating and ensuring preservation of biologically active
substances. Wheat and gram or pea flour, or a composition thereof is mixed into the melted butter, which is in a liquid state. Flour and butter are mixed until uniform mass is obtained while maintaining heat regiment, in which case gram and/or pea flour precipitates on the bottom. To avoid residue formation, the mixture is stirred time to time. Nutritional and biological value of the product, as well as its qualitative characteristics, such as color and smell, are determined by selecting the ratio between wheat and gram and/or pea flour. As an option, powder additives, such as flavorings, food dyes or medicinal herb powder can be added to the protein mass at the preparation stage to enhance taste and esthetic characteristics. For example, we used turmeric root powder, which serves as a dye and biologically active substance at the same time. Historically, turmeric was used in the traditional Indian medicine as an indigestion remedy, bile production stimulator, and liver function enhancer.

The high-boiling sugar mass is prepared by mixing sugar or other sweetener with water and producing syrup by boiling. Once the boiling mixture turns brownish, the boiling is stopped. Hot high-boiled sugar mass is poured onto a flat surface, for example stone table, and shaped as a caramel toffee (fig. 2b) in the process of cooling down by folding and/or turning using special scrapers. During the cool-down process, the sugar caramel is periodically checked for viscosity. At a temperature, at which the mass becomes stretchable as a viscous toffee, like a chewing gum (50-70°C, depending on sweetener) and starts to spread out, for example, by 0.1 m and more (Fig. 2a), the high-boiled sugar mass is placed into the protein mass (Fig. 3a) and the process of forming a fine fibrous texture of the sweet (product) begins.

Formation of a fine-fibrous texture of the future product is realized by way of repeated stretching of the high-boiled sugar mass and the saturation thereof with protein mixture (Fig. 3b) until complete impregnation (Fig. 4a). After each stretching cycle, saturated high-boiled sugar mass is folded into smaller sizes, for example, by braiding, crisscrossing, coiling or spiraling, and if necessary, firmed up by twisting, after which the cycle repeats. In the process of forming the texture of the product, the temperature of protein mass is maintained at the level, which ensures continuing stretchability. To achieve this, the mixture is heated (if necessary). Repeated stretching with saturation using a mixture of wheat and gram and/pr pea flour provides a bunch of fine "filaments" (Fig. 3b, Fig. 4a) or a fine-fibrous layered texture of the future product (Fig. 5b). The ready-to-use mass (Fig. 4a) is subject to repeated longitudinal stretching and folding to form additional layers and height of the product. The finished product (Fig. 4b) is firmed up by rolling and shaped as desired. The ready-to-use mass can be firmed up before and after cooling. In addition, nuts and/or seeds, and/or fruit pieces, and/or icing or other flavoring and esthetic additives can be sprinkled on top of the product. The obtained fine-fibrous sweet (Fig. 4b) is cut into small pieces in the style of a pastry, or shaped otherwise, after which the product is ready for use. The ratio between high-boiled sugar mass and protein mass determines the richness and softness of the product.

### Best mode for carrying out the invention

Table 1 shows examples of using gram flour.

Example 1. Both high-boiled sugar mass and protein mass are prepared in advance. To prepare a protein mass, the highest grade wheat flour and very fine ground gram flour are used at the ratios of 1.0:0.25; 1.0:0.6; 1.0:1.0; and 1:1.6, respectively, along with real butter. The high-boiled sugar mass is prepared using cane sugar and water. The sweet is prepared according to the above described method. The high-boiled sugar mass and protein mass are used at the ratio of 3:7 (3 kg and 7 kg, respectively). If excess of protein mass is used, the product comes out very rich, with fine-fibrous layered texture and fibers easily separating in the longitudinal direction; when broken off - an uneven layered fibrous surface can be seen. The sweet has no off-flavors and tastes as a real butter combined with the original taste of chickpea; the color is light-yellow. From the outside, the sweet looks like a layered pastry. The ratio between wheat and gram flour affects the nutritional properties and porosity of the product. The 1:0.6 ratio between wheat and gram flour is preferable.

Example 2. Similar to Example 1. Wheat and gram flours are used at the ratios of 1.0:0.25; 1.0:0.6; 1.0:1.0; and 1:1.6. The high-boiled sugar mass and protein mass are used at the ratio of 1:1 (5 kg and 5 kg, respectively). An equal quantity of wheat and gram flour is preferable. The resulting product is rich, has fine-fibrous texture, and tastes as a real butter combined with the original taste of chickpea; the color is light-yellow. The ratio between wheat and gram flour affects the nutritional properties and porosity. The 1:0.6 ratio between wheat and gram flour is preferable. In appearance, the sweet resembles a pastry (Fig. 5a, b). The shelf life tests of the finished product have shown that after 6 months the sweet retains its qualitative and nutritional characteristics with no loss of taste, color or smell.

Example 3. Similar to Example 1. The resulting product is not as rich, the fibers are of coarse and fine texture, the product layers are more firm, however, the product retains its taste qualities; the taste is that of a real butter combined with the original taste of chickpea; the color is light-yellow.

Example 4. Similar to Example 2. The addition of BAS, particularly - honey, to the high-boiled sugar mass allows improvement of the qualitative and nutritional characteristics of the product. The product has rich fine-fibrous layered texture with honey flavor. The original taste of real butter combined with the taste of chickpea and buckwheat honey. The use of buckwheat honey results in adding a light-brown color to the sweet.

Example 5. Similar to Example 2. The addition to the high-boiled sugar mass of turmeric, which serves as a BAS and a dye at the same time, allows improvement of the biological and nutritional characteristics of the product. The use of a flavoring agent adds a fruity flavor and taste to the sweet. The resulting product is rich, has fine-fibrous layered texture with the original taste of real butter combined with the taste of chickpea and fruit, the color is saffron.

Similarly, the examples are provided to illustrate preparation of the sweet using pea flour and a combination of gram and pea flours. Due to the fact that both pea and gram flours absorb very little butter, the products have similar fine-fibrous texture and differ only by their biological characteristics and color. The products, prepared using the pea flour, have the original taste of pea. The products, prepared using a composition of flours, have the taste of chickpea and pea. The fine fibers separate easily, and a piece of the sweet "melts" in your mouth. Depending on the composition, the sweet has natural shades without the use of dyes, or shades wit the use of dyes. When using pea flour, the resulting color is yellow or green; when using a composition of gram and pea flours, the resulting color is cream and light-brown. Similar to Example 5, the use of turmeric as a dye and BAS results in saffron color of the sweet.

The sweet is easily digested due to fine-fibrous texture (dissolves in your mouth), while all useful components enter the body through a mucous membrane of the mouth. Due to balanced content of fats, proteins and carbohydrates, the product becomes filling, and one small piece causes the fullness effect.

Thus, the claimed invention broadens the assortment of confectionary dietary products, allows obtaining an easily digestible product with high biological and nutritional characteristics, original taste qualities and improved shelf life. The sweet is especially useful for children and teenagers, since it represents balanced nutrition, stimulates growth and improves reduced appetite.

## Claims

1. A sweet comprising a protein mass and high-boiled sugar mass, *wherein* said high-boiled sugar mass consists of sugar and/or a sugar substitute and water, and said protein mass consists of wheat and gram flour or pea flour, or a composition thereof, and a melted animal fat or vegetable oil, preferably, real butter, at the following component ratio, wt.%:
- high-boiled sugar mass: 30-70;
- protein mass: 70-30,
while wheat and gram or pea flours or a composition thereof is used at the ratio of 1:0.25-1.6, respectively; said sweet has a layered fine-fibrous texture obtained as a result of repeated stretching of said high-boiled sugar mass and saturation thereof with the protein mass.

2. The sweet comprising a protein mass, high-boiled sugar mass and special additives, *wherein* said high-boiled sugar mass consists of sugar and/or a sugar substitute and water, and said protein mass consists of wheat and gram flour or pea flour, or a composition thereof, and a melted animal fat or vegetable oil, preferably, real butter, at the following component ratio, wt.%:
- high-boiled sugar mass: 30-65;
- protein mass: 65-30;
- special additives: the balance,
while wheat and gram or pea flours or a composition thereof is used at the ratio of 1:0.25-1.6, respectively; said sweet has a layered fine-fibrous texture obtained as a result of repeated stretching of said high-boiled sugar mass and saturation thereof with the protein mass.

3. A method for preparing a sweet comprising preparation of a protein mass with addition of gram flour, and concurrent preparation of a high-boiled sugar mass, *wherein* said high-boiled sugar mass is prepared in the form of a viscous toffee from sugar and/or a sugar substitute and water, and said protein mass is prepared from melted animal fat or vegetable oil, preferably real butter, and a composition of wheat flour and gram and/or pea flour; the sweet is shaped in the form of a layered product made up of fine fibers by the repeated stretching of the high-boiled sugar mass and the saturation thereof with the protein mass.

4. The method according to Claim 3, *wherein* wheat and gram and/or pea flour or a composition thereof is used at the ratio of 1:0.25-1.6.

5. The method according to Claim 3, *wherein* during the preparation stage, special additives, such as food dye and/or biologically active substance (BAS), and/or flavoring are introduced to the protein and/or high-boiled sugar mass.

6. The method according to Claim 3, *wherein* saturation of the high-boiled sugar mass with the protein mass is performed at a temperature that ensures stretchability.

7. The method according to Claim 3, *wherein* after each stretching cycle, saturated high-boiled sugar mass is folded into smaller sizes, for example, by braiding, crisscrossing, coiling or spiraling.

8. The method according to Claim 3, *wherein* in order to form additional layers, the saturated mass is subject to repeated longitudinal stretching and folding.

9. The method according to Claim 7, *wherein* the braided or folded to smaller sizes mass is twisted.

10. The method according to Claims 3 and 8, *wherein* the saturated mass is firmed up.
